# EUROPÄISCHE PATENTANMELDUNG

(11) **EP 1 256 402 A2**
(43) Veröffentlichungstag der Anmeldung: **13.11.2002**
(21) Anmeldenummer: 02008904.1
(22) Anmeldetag: 20.04.2002
(51) Int. Cl.: B22D 17/20

(54) **Verfahren und Vorrichtung zur Aufbereitung abgenutzter Druckguss-Füllkammern**

(30) Priorität: 11.05.2001 DE 10123028
(71) Anmelder: Weier, Ludger, 57368 Lennestadt (DE)
(72) Erfinder: Weier, Ludger, 57368 Lennestadt (DE)
(74) Vertreter: von Kirschbaum, Alexander, Dipl.-Ing.

(57) **Zusammenfassung**

Bei einem Verfahren zur Aufbereitung abgenutzter Druckguß-Füllkammern (14) wird im Bereich einer Abnutzung (46) eine Innenseite (42) abtragend bearbeitet. Hierbei wird die Abnutzung (46), bei der es sich beispielsweise um eine Auswaschung handelt, ausgeglichen. Im nächsten Schritt wird eine Schweißnaht schraubenlinienförmig an der Innenseite (42) der Füllkammer (14) aufgebracht. Die Füllkammer (42) ist während des Schweißvorgangs horizontal angeordnet. Nach dem Aufbringen der Schweißnaht erfolgt eine Nachbearbeitung der Innenseite (42) der Füllkammer (14).

## Beschreibung

Die Erfindung betrifft ein Verfahren und eine Vorrichtung zur Aufbereitung abgenutzter Druckguß-Füllkammern. Das Verfahren sowie die Vorrichtung sind insbesondere für beim Aluminium-Druckguß eingesetzte Füllkammern geeignet.

Zum Zuführen des geschmolzenen Gußmaterials in die Gußform sind beim Druckgießen Füllkammern vorgesehen. Diese sind der Druckgußform vorgeschaltet und dienen zum Zuführen des Gußmaterials unter Druck. Derartige Füllkammern weisen eine im wesentlichen zylindrische Form mit einer zylindrischen Innenkammer auf. Über eine beispielsweise seitlich, d.h. in der Mantelfläche der zylindrischen Füllkammer angeordnete, Einlaßöffnung wird das Gußmaterial der Füllkammer zugeführt. Innerhalb der Füllkammer ist ein Kolben angeordnet, durch den das Gußmaterial in die Gußform gedrückt wird. Hierzu wird der Kolben in Längsrichtung der Füllkammer bewegt.

Insbesondere auf Grund der hohen Temperaturen des Gußmaterials treten innerhalb der Füllkammer, die üblicherweise aus Warmarbeitsstahl besteht, starke Abnutzungen bzw. Auswaschungen auf. Dies führt zu Undichtigkeiten zwischen dem Kolben und der Füllkammer. Auf Grund der Undichtigkeiten kann ggf. durch den Kolben kein ausreichender Druck mehr erzeugt werden. Dies hat zur Folge, dass die Füllkammer ausgetauscht werden muss.

Da sichergestellt werden muss, dass das Gußmaterial innerhalb der Füllkammer nicht zu stark abkühlt, weisen Füllkammern häufig in ihrer Wandung Bohrungen auf, um ein gezieltes Erwärmen oder Kühlen der Füllkammer zu ermöglichen. Die Kosten für Füllkammern sind daher relativ hoch.

Um abgenutzte Füllkammern, d.h. Füllkammern mit Auswaschungen, wiederverwenden zu können, ist es bekannt, die innere zylindrische Kammer auszudrehen, so dass die Kammer wieder einen konstanten Durchmesser aufweist. Das Ausdrehen von Füllkammern hat den Nachteil, dass der Innendurchmesser zunimmt und somit ein neuer Kolben mit größerem Durchmesser verwendet werden muss. Ferner ist das Ausdrehen von Füllkammern auf Grund der begrenzten Wandstärke der Füllkammer sowie der in der Wand vorgesehenen Kühlbohrungen meistens nur einmal möglich. Ein mehrmaliges Aufarbeiten einer abgenutzten Füllkammer ist somit durch Ausdrehen nur begrenzt möglich.

Aus DE 40 40 032 ist es bekannt, eine Füllkammer zur Erhöhung der Verschleißfestigkeit mit einer Schutzschicht zu versehen.

Aufgabe der Erfindung ist es, ein Verfahren zur Aufbereitung abgenutzter Druckguß-Füllkammern zu schaffen, mit dem eine mehrfache Aufarbeitung möglich ist. Ferner ist es Aufgabe der Erfindung, eine zur Durchführung des Verfahrens geeignete Vorrichtung zu schaffen.

Bei dem erfindungsgemäßen Verfahren zur Aufbereitung abgenutzter Druckguß-Füllkammern wird zunächst der zylindrische Innenraum der Füllkammer zumindest im Bereich der Abnutzung abtragend bearbeitet. Vorzugsweise handelt es sich hierbei um ein Ausdrehen des zylindrischen Innenraums, so dass dieser einen konstanten Durchmesser aufweist. Erfindungsgemäß wird in einem weiteren Verfahrensschritt mittels Auftragschweißen eine schraubenlinienförmige Schweißnaht auf die Innenseite des zylindrischen Innenraums der Füllkammer aufgebracht. Versuche haben gezeigt, dass eine gleichmäßige Auftragsschweißnaht dadurch erzielt werden kann, dass die Füllkammer während des Schweißvorgangs horizontal angeordnet ist. Das Herstellen der schraubenlinienförmigen Auftragsschweißnaht erfolgt somit in Wannenlage. Durch das Aufbringen der Auftragsschweißnaht ist der Innendurchmesser des Innenraums der Füllkammer verringert. Anschließend erfolgt eine Nachbearbeitung der Schweißnaht, so dass die Innenseite des Innenraums durch Einsatz der Druckguß-Füllkammer die erforderliche geringe Rauigkeit aufweist. Ferner wird durch die Nachbearbeitung der innerhalb der Toleranzen geforderte Innendurchmesser der Füllkammer hergestellt.

Die Füllkammer wird erfindungsgemäß in ihrer horizontalen Lage während des Auftragsschweißens um ihre Längsachse gedreht. Hierdurch ist sichergestellt, dass sich das Schweißgut gleichmäßig an der Innenseite des Innenraums der Füllkammer verteilt und keine Materialhäufungen auftreten.

Durch das erfindungsgemäße Verfahren ist es möglich, eine Druckguß-Füllkammer mehrfach wieder aufzuarbeiten. Die Lebensdauer der Füllkammern ist damit erheblich vergrößert. Hierdurch sind die Kosten der Herstellung von Druckgußteilen erheblich verringert. Ferner weist das erfindungsgemäße Verfahren den Vorteil auf, dass der Innendurchmesser des zylindrischen Innenraums bei der Nachbearbeitung derart gewählt werden kann, dass er dem ursprünglichen Durchmesser des Innenraums entspricht. Dies hat den Vorteil, dass auch bei wiederaufbereiteten Druckguß-Füllkammern der ursprüngliche Kolben verwendet werden kann.

Zur Erzeugung der schraubenlinienförmigen Schweißnaht erfolgt eine Relativbewegung zwischen einem Schweißdrahtende und der Füllkammer in Längsrichtung der Füllkammer. Vorzugsweise wird der Schweißdraht bewegt, so dass insbesondere ein Drehen der Füllkammer um ihre Längsachse sowie ein Bewegen des Schweißdrahtes in Längsrichtung stattfindet.

Vorzugsweise wird die Drehgeschwindigkeit der Füllkammer, die Relativbewegung zwischen dem Schweißdrahtende und der Füllkammer in Längsrichtung der Füllkammer sowie der Schweißdrahtvorschub derart aufeinander abgestimmt, dass eine gleichmäßige geschlossene Oberfläche auf der Innenseite des Füllkörpers erzeugt wird. Die einzelnen Parameter können vorzugsweise gesondert voneinander gesteuert werden. Hierbei kann insbesondere auch die Temperatur der Innenseite der Füllkammer, der verwendete Schweißdraht u. Ä. berücksichtigt werden.

Die im ersten Schritt des erfindungsgemäßen Verfahrens erfolgende abtragende Bearbeitung erfolgt vorzugsweise durch Ausdrehen. Hierdurch wird auf einfache Weise ein zylindrischer Innenraum mit konstantem Durchmesser erzeugt. Dies hat den Vorteil, dass das Schweißgut durch eine einfache konstante Drehbewegung der Füllkammer um ihre Längsachse gleichmäßig aufgetragen werden kann. Es entstehen somit beim Auftragen des Schweißgutes keine Materialhäufungen an den Rändern einer Bearbeitungszone o.dgl.

Zusätzlich ist es möglich, in einem besonders stark abgenutzten Bereich, wie beispielsweise einer gegenüber der Einlaßöffnung der Füllkammer vorhandenen Auswaschung, vor oder nach dem Ausdrehen des gesamten Innenraums der Füllkammer in diesem Bereich eine gesonderte abtragende Bearbeitung durchzuführen. Hierdurch muss bei tiefen Auswaschungen nicht über den gesamten Innenraum der Füllkammer Material abgetragen werden. Hierdurch wird die Bearbeitungszeit verringert. Ferner ist hierdurch gewährleistet, dass sich in der Wand der Füllkammer befindende Kühlbohrungen beim Ausdrehen nicht beschädigt werden. Vor dem schraubenlinienförmigen Auftragsschweißen über die gesamte ausgedrehte Länge des zylindrischen Innenraums erfolgt im Bereich der zusätzlich bearbeiteten Auswaschung ein Auftragsschweißen. Hierbei kann die Füllkammer ebenfalls um ihre Längsachse gedreht werden, wobei durch eine entsprechende Steuerung des Schweißgeräts nur im Bereich der Auswaschung ein Auftragsschweißen erfolgt. Nach dem Auftragsschweißen im Bereich der Auswaschung weist der Innenraum der Füllkammer eine im wesentlichen zylindrische Form auf.

Vorzugsweise wird nach dem Auftragsschweißen in einem eine Auswaschung aufweisenden Bereich der Innenraum der Füllkammer ebenfalls erneut ausgedreht.

Bei einer besonders bevorzugten Ausführungsform des Verfahrens wurde festgestellt, dass die Schweißnahtqualität durch Vorwärmen der Füllkammer erheblich verbessert werden kann. Bei dickwandigen Füllkammern aus Warmarbeitsstahl werden diese vorzugsweise innerhalb eines Temperaturbereichs von 250 - 380 °C erwärmt. Insbesondere beträgt der Temperaturbereich 280 - 350 °C und besonders bevorzugt 300 - 330 °C.

Insbesondere ist die Qualität der Aufarbeitung auch von dem verwendeten Schweißdraht abhängig. Versuche haben gezeigt, dass insbesondere mit einer schlackefreien Fülldrahtelektrode gute Schweißergebnisse erzielt werden können. Vorzugsweise wird eine Fülldrahtelektrode verwendet, in der Karbide eingelagert sind. Besonders bevorzugt wird eine Fülldrahtelektrode der Fa. Castolin-Eutectic mit der Bezeichnung EnDoTec DO*16 verwendet.

Ferner betrifft die Erfindung eine Vorrichtung zur Aufbereitung abgenutzter Druckguß-Füllkammern. Die Vorrichtung ist insbesondere zur Durchführung des vorstehend beschriebenen Verfahrens geeignet.

Die erfindungsgemäße Vorrichtung weist eine Aufnahmeeinrichtung zur horizontalen Aufnahme der Füllkammer auf. In der Aufnahmeeinrichtung wird die Füllkammer somit in einer Wannenlage gehalten. Ferner weist die erfindungsgemäße Vorrichtung eine Bearbeitungseinrichtung zur Bearbeitung der Innenseite des Innenraums der Füllkammer auf. Beispielsweise handelt es sich bei der Bearbeitungseinrichtung um ein Werkzeug zum Ausdrehen des Innenraums. Erfindungsgemäß ist ferner eine Schweißeinrichtung vorgesehen, um eine schraubenlinienförmige Schweißnaht an der Innenseite des Innenraums der Füllkammer durch Auftragsschweißen aufzubringen. Das Aufbringen der Schweißnaht erfolgt in Wannenlage.

Vorzugsweise weist die Aufnahmeeinrichtung eine Antriebseinheit zum Drehen der Füllkammer in ihre Längsrichtung auf. Ferner weist die Aufnahmeeinrichtung und/oder die Bearbeitungseinrichtung eine Vorschubeinrichtung auf, um die Bearbeitungseinrichtung relativ zur Aufnahmeeinrichtung in Richtung der Längsachse gegeneinander bewegen zu können.

Ferner kann die erfindungsgemäße Vorrichtung, wie vorstehend anhand des Verfahrens beschrieben, vorteilhaft weitergebildet sein.

Nachfolgend wird die Erfindung anhand einer bevorzugten Ausführungsform unter Bezugnahme auf die anliegenden Zeichnungen näher beschrieben.

Es zeigen:
- Fig. 1: eine schematische Seitenansicht einer erfindungsgemäßen Vorrichtung zur Aufbereitung abgenutzter Druckguß-Füllkammern,
- Fig. 2: eine schematische perspektivische Ansicht einer in der erfindungsgemäßen Vorrichtung gehaltenen Füllkammer und
- Fig. 3: eine schematische perspektivische Ansicht einer Füllkammer.

Die Vorrichtung weist im dargestellten Ausführungsbeispiel zwei Aufnahmeeinrichtungen 10,12 auf, von denen die Druckguß-Füllkammer 14 gehalten ist. Die Aufnahmeeinrichtungen 10,12, bei denen es sich im dargestellten Ausführungsbeispiel um Spannfutter handelt, die beispielsweise bei Drehbänken eingesetzt werden, halten die im wesentlichen eine zylindrische Außenkontur aufweisende Füllkammer rotationssymmetrisch zu einer Längsachse 16. Die Längsachse 16 der Füllkammer 14 ist deckungsgleich mit der Rotationsachse, um die die Füllkammer 14 mit Hilfe des Spannfutters 10 gedreht werden kann. Hierzu ist das Spannfutter 10 über eine Welle 18 mit einem Antriebsmotor 20 verbunden.

Ferner weist die erfindungsgemäße Vorrichtung eine Schweißeinrichtung 22 auf. Die Schweißeinrichtung 22 ist mit einer Energieversorgung verbunden und weist eine in den Innenraum der Füllkammer 14 weisende Elektrode 24 auf. Die Schweißeinrichtung 22 ist auf einem Schlitten 26 montiert, der in Richtung des Pfeils 28 vertikal verschiebbar ist. Die Verschiebung des Schlittens 26 und damit eines Schweißdrahtendes 25 erfolgt durch eine Leitspindel entlang der Führungsschienen 30.

Wie vorstehend beschrieben, kann somit mit Hilfe der erfindungsgemäßen Maschine an der Innenseite der Füllkammer 14 ein schraubenlinienförmiges Aufschweißen erfolgen. Hierzu wird die Füllkammer 14 mit Hilfe der Antriebseinheit 20 in eine Rotation um die Längsachse 16 versetzt. Gleichzeitig erfolgt während des Schweißvorgangs ein Vorschub in Richtung des Pfeils 28. Durch den Antrieb mittels einer Leitspindel besteht ein festes Verhältnis zwischen Umdrehungszahl und Vorschub. Die Drehgeschwindigkeit der Füllkammer 14 sowie die Vorschubgeschwindigkeit des Schlittens 26 sind somit synchronisiert, so dass eine geschlossene schraubenlinienförmige Schweißnaht ausgebildet werden kann, wobei die einzelnen Windungen der schraubenlinienförmigen Schweißnaht keinen Abstand zueinander aufweisen.

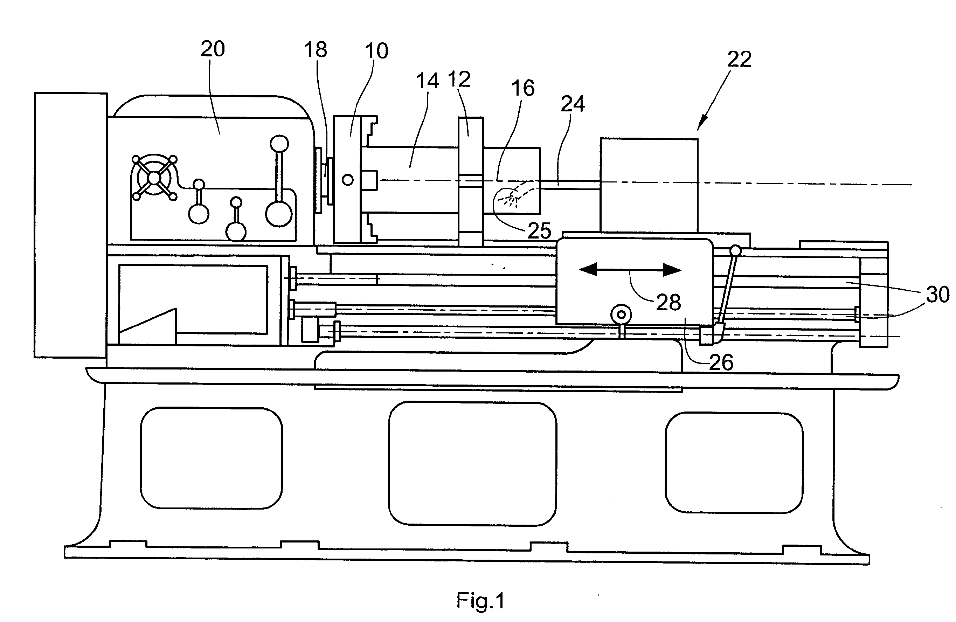

Da die Füllkammer vor dem Aufbringen der Schweißnaht an der zylindrischen Innenseite bearbeitet, vorzugsweise ausgedreht, werden muss, kann die erfindungsgemäße Vorrichtung vorzugsweise derart umgebaut werden, dass anstelle der Schweißeinrichtung 22 ein Spannfutter o.dgl. für einen Drehmeißel angeordnet werden kann. Somit ist es möglich, mit derselben Vorrichtung den Innenraum der Füllkammer 14 sowohl auszudrehen als auch mit einer Schweißnaht zu versehen. Ein Umspannen der Füllkammer 14 ist zwischen den einzelnen Bearbeitungsschritten nicht erforderlich. Ebenso ist es möglich, nach dem Aufbringen der Schweißnaht diese wiederum zu bearbeiten. Dies kann ebenfalls mit der in Fig. 1 dargestellten Vorrichtung geschehen.

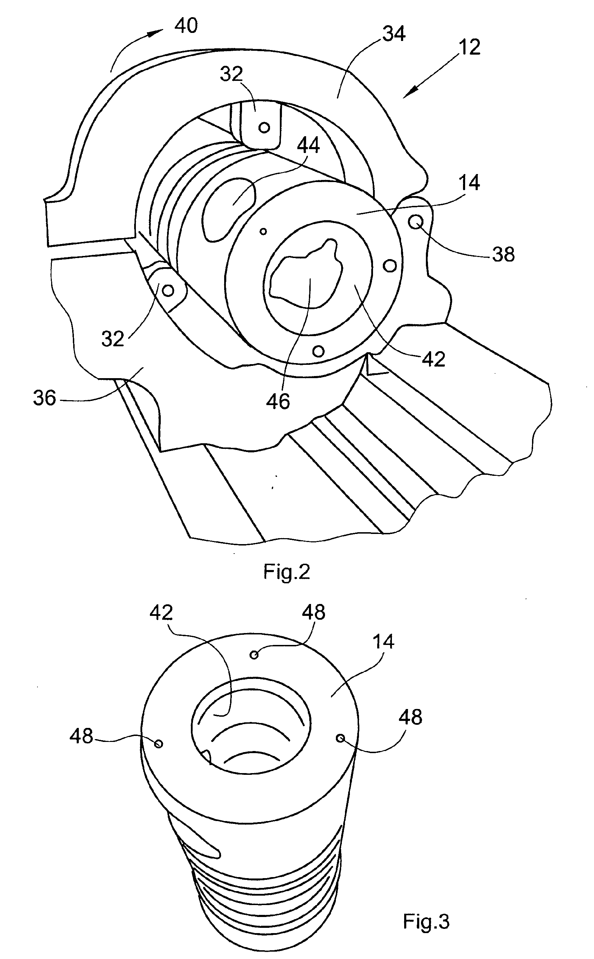

Aus Fig. 2 ist eine bevorzugte Ausführungsform der Aufnahmeeinrichtung 12 entnehmbar. Im Gegensatz zu dem Spannfutter 10 (Fig. 1), das sich zusammen mit der Füllkammer 14 dreht, ist die Aufnahmevorrichtung 12 stationär. Um ein Drehen der Füllkammer 14 in der Aufnahmeeinrichtung 12 zu ermöglichen, weist diese an radial nach innen weisenden Ansätzen 32 Rollen auf, die an der äußeren Mantelfläche der zylinderförmigen Füllkammer anliegen. Die Aufnahmeeinrichtung 12 weist ein Oberteil 34 und ein Unterteil 36 auf. Diese sind über ein Scharnier 38 gelenkig miteinander verbunden. Zum Herausnehmen oder Einlegen der Füllkammer 14 kann das Oberteil 34 der Aufnahmeeinrichtung 12 in Richtung eines Pfeils 40 aufgeklappt werden.

Die in Fig. 2 dargestellte Füllkammer 14 weist an ihrer Innenseite 42 gegenüber einer Einlaßöffnung 44 eine Auswaschung 46 auf. Im ersten Schritt des erfindungsgemäßen Verfahrens wird die Innenseite 42 der Füllkammer 44 vorzugsweise durch Ausdrehen derart bearbeitet, dass die Auswaschung 46 ausgeglichen ist. Die Innenseite 42 der Füllkammer 14 wird somit soweit ausgedreht, dass eine vollständig ebene Innenseite 42 vorhanden ist.

Zur Kühlung der Füllkammer während der Herstellung eines Gußteils weist die Füllkammer Kühlbohrungen 48 auf.

## Patentansprüche

1. Verfahren zur Aufbereitung abgenutzter Druckguß-Füllkammern (14) mit den Schritten:
abtragendes Bearbeiten eines zylindrischen Innenraums der Druckguß-Füllkammer (14) im Bereich einer Abnutzung (46),
schraubenlinienförmiges Aufbringen einer Schweißnaht mittels Auftragsschweißen, wobei die Druckguß-Füllkammer (14) während des Schweißvorgangs in horizontaler Lage um ihre Längsachse (16) gedreht wird, und
Nachbearbeiten der Schweißnaht.

2. Verfahren nach Anspruch 1, bei welchem die Füllkammer relativ zu einem Schweißdrahtende (25) in Längsrichtung (16) der Druckguß-Füllkammer (14) bewegt wird.

3. Verfahren nach Anspruch 2, bei welchem die Drehgeschwindigkeit, die Relativgeschwindigkeit und der Schweißdrahtvorschub derart aufeinander abgestimmt sind, dass eine geschlossene Oberfläche auf der Innenseite (42) der Druckguß-Füllkammer (14) erzeugt wird.

4. Verfahren nach einem der Ansprüche 1-3, bei welchem die abtragende Bearbeitung durch Ausdrehen erfolgt, so dass die Druckguß-Füllkammer (14) eine zylindrische Innenform aufweist.

5. Verfahren nach Anspruch 4, bei welchem zusätzlich eine abtragende Bearbeitung im Bereich der Abnutzung (46) durchgeführt wird.

6. Verfahren nach Anspruch 5, bei welchem vor dem schraubenlinienförmigen Auftragsschweißen ein Auftragsschweißen im bearbeiteten Bereich der Ausnutzung (46) erfolgt.

7. Verfahren nach Anspruch 6, bei welchem nach dem Auftragsschweißen im Bereich der Abnutzung (46) und vor dem schraubenlinienförmigen Auftragsschweißen ein Ausdrehen der Druckguß-Füllkammer (14) erfolgt.

8. Verfahren nach einem der Ansprüche 1-7, bei welchem die Druckguß-Füllkammer (14) vor dem Auftragsschweißen vorgewärmt, insbesondere auf eine Temperatur von 250 - 380 C°, besonders bevorzugt 280 - 350 °C, vorgewärmt wird.

9. Verfahren nach einem der Ansprüche 1-8, bei welchem zum Auftragsschweißen eine schlackearme Fülldrahtelektrode verwendet wird.

10. Verfahren nach einem der Ansprüche 1-9, bei welchem die zum Auftragsschweißen verwendete Schweißelektrode eingelagerte Karbide aufweist.

11. Vorrichtung zur Aufbereitung abgenutzter Druckguß-Füllkammern (14) nach dem Verfahren nach einem der Ansprüche 1-10, mit
einer Aufnahmeeinrichtung (10,12) zur horizontalen Aufnahme der Druckguß-Füllkammer (14),
einer Bearbeitungseinrichtung zur Bearbeitung der Innenseite (42) der Druckguß-Füllkammer (14) und
einer Schweißeinrichtung (22) zum spirallinienförmigen Aufbringen einer Schweißnaht an der Innenseite (42) der Füllkammer in horizontaler Lage.

12. Vorrichtung nach Anspruch 11, **dadurch gekennzeichnet, dass** die Aufnahmeeinrichtung (10) mit einer Antriebseinheit zum Drehen der Druckguß-Füllkammer (14) um eine Längsachse (16) verbunden ist.

13. Vorrichtung nach Anspruch 11 oder 12, **gekennzeichnet durch** eine Vorschubeinrichtung (26), **durch** die eine Relativbewegung zwischen der Druckguß-Füllkammer (14) und einem Schweißdrahtende (25) möglich ist.

14. Vorrichtung nach einem der Ansprüche 11-13, **dadurch gekennzeichnet, dass** die Bearbeitungseinrichtung ein Drehwerkzeug zum Ausdrehen der Druckguß-Füllkammer (14) aufweist.
